# FASCICULE DE BREVET EUROPEEN

(11) **EP 0 609 128 B1**
(45) Date de publication et mention de la délivrance du brevet: **28.04.2004**
(21) Numéro de dépôt: 94400144.5
(22) Date de dépôt: 24.01.1994
(51) Int. Cl.: G06F 13/38, H04L 12/56

(54) **Dispositif de gestion de mémoire tampon de cellules**
Verwaltungsvorrichtung von Zellenpufferspeicher
Device for managing a cell buffer memory

(30) Priorité: 27.01.1993 FR 9300799
(43) Date de publication de la demande: 03.08.1994
(73) Titulaire: ALCATEL, 75008 Paris (FR)
(72) Inventeur: Henrion, Michel, B-1180 Bruxelles (BE)
(74) Mandataire: Sciaux, Edmond

(56) Documents cités:
- EP-A- 0 388 951
- EP-A- 0 502 436
- WO-A-92/19060
- US-A- 5 126 999

## Description

La présente invention concerne un dispositif de gestion de mémoire tampon de cellules.

Un tel dispositif trouvera son emploi dans les systèmes de commutation de données organisées en paquets ou cellules, notamment dans de tels systèmes de type ATM (à multiplexage temporel asynchrone), dans lesquels un des aspects critiques des performances en matière d'écoulement du trafic est la nécessité du multiplexage statistique de flux de cellules différents, ce que l'on réalise dans la forme la plus simple, à l'aide d'une mémoire tampon recevant des cellules d'entrée de plusieurs sources de cellules et fournissant des cellules de sortie à une seule liaison de sortie. Le dispositif de gestion de la mémoire tampon a notamment pour fonction de diriger les cellules d'entrées vers les emplacements de mémoire libres dans la mémoire tampon.

Quand le flux total des cellules d'entrée dépasse le flux des cellules de sortie, la mémoire tampon se remplit. Lorsqu'elle est pleine, une cellule d'entrée survenant, la perte d'une cellule est inévitable. Cet évènement est rare, du fait que le débit de cellules de la liaison de sortie est au moins égal à la somme des débits moyens des sources de cellules. Il se produit, de façon aléatoire, lors de pointes simultanées du débit de cellules de plusieurs sources. Il frappe donc les sources de cellules en proportion de leur débit. Si la proportion de cellules qu'il est admis de perdre est la même pour toutes les sources, on peut donc l'accepter.

Toutefois, les données à multiplexer peuvent correspondre à des services différents et des performances différentes en termes de perte de cellule peuvent leur être assignées.

La solution consistant à dimensionner la mémoire tampon de façon à satisfaire la performance de perte la plus élevée vis-à-vis de l'ensemble des services est critiquable en raison de ce que, d'une manière générale, il est toujours souhaitable de limiter la capacité des mémoires tampon, non pas pour en limiter le coût, mais parce que, plus grande est la mémoire tampon, plus long est le temps que peuvent y passer certaines cellules. Inversement, pour une mémoire tampon de capacité donnée, il est intéressant de pouvoir augmenter l'intensité du flux de cellules sur la liaison de sortie tout en satisfaisant les objectifs de taux de perte de cellules pour chaque service.

Des solutions plus complexes ont été considérées dans l'article "Limiting removal depth in the pushout scheme for ATM networks", de R. Beraldi et al, publié dans les ICC'92 de la IEEE.

La première, dénommée "Threshold" ou "Partial Buffer Sharing", consiste à définir deux flux de cellules, l'un a priorité de perte élevée, l'autre à priorité de perte faible, et à définir, dans une mémoire tampon de capacité totale K un espace plus réduit de dimension S. Quand l'espace S n'est pas rempli, les deux flux de cellules ont librement accès à la mémoire tampon. Dès que l'espace S est rempli, seules les cellules du flux de cellules de priorité élevée sont enregistrées dans la mémoire tampon, les cellules du flux de cellules de priorité faible sont alors perdues.

La deuxième, dénommée "Pushout", consiste à définir deux flux de cellules comme plus haut et, lorsque la mémoire tampon (non partitionnée) est pleine, à y admettre quand même une cellule d'entrée, si la mémoire tampon contient au moins une cellule du flux de cellules de priorité faible et si la cellule d'entrée appartient au flux de cellules de priorité élevée. Après élimination de cellule de priorité faible, la file d'attente est éventuellement réorganisée et la cellule d'entrée peut alors être acceptée dans la mémoire tampon disposant d'un emplacement libre.

Ces deux solutions favorisent le flux de cellules de priorité élevée, au détriment du flux de cellules de priorité faible. Elles ne sont toutefois pas satisfaisantes en ce qu'elles n'envisagent que deux classes de flux de cellules, la gestion de la mémoire tampon devenant difficile dès que l'on considère plus de deux classes. Par ailleurs, le dimensionnement de la mémoire tampon ne peut se faire qu'à partir d'hypothèses sur la proportion de cellules des deux flux de cellules dans le flux total de cellules d'entrée. Bien entendu, de telles hypothèses ne sont possibles que dans la mesure où l'on peut traiter de flux de cellules prédéfinis auxquels ont peut associer des débits qui leur sont propres.

Cela étant, lorsque ces hypothèses ne sont pas satisfaites, les mesures adoptées ne procurent pas toujours les résultats attendus. Ainsi, on peut considérer que ces deux solutions connues sont l'une et l'autre "injustes" lorsque le flux de cellules de priorité faible ayant un débit relativement faible, un dépassement persistant de débit du flux de cellules de priorité élevée amène au remplissage complet de l'espace S de la mémoire tampon (solution "Threshold") ou de l'ensemble de la mémoire tampon (solution "Pushout). En effet, à partir de ce moment, un débit d'entrée total excessif va causer la perte de cellules du seul flux de cellules de priorité faible, alors que la cause de la surcharge de la mémoire tampon se trouve dans le débit antérieur excessif du flux de cellules de priorité élevé.

Il existe toutefois des cas, où l'on souhaite favoriser non pas un flux de cellules prédéfini par rapport aux autres, mais un flux de cellules non prédéfini constitué de cellules individuelles dont l'appartenance à ce flux de cellules non prédéfini possède un caractère arbitraire. Dans ce cas, il n'est plus permis de faire des hypothèses sur le débit de tels flux de cellules non prédéfinis. Les solutions connues que l'on vient de discuter ne sont alors plus applicables.

Or, dans l'état actuel des études sur les systèmes à large bande employant les techniques ATM, il est justement question d'attribuer aux cellules des connexions individuelles, non seulement une classe de qualité de service valable pour toutes les cellules de la connexion, mais aussi une indication de priorité de perte de cellule propre à chaque cellule. Cela revient à constituer un flux de cellules non prédéfini pour chaque valeur de l'indication de priorité de perte de cellules, l'appartenance de ces cellules à un tel flux possédant un caractère arbitraire.

Il existe donc un besoin pour un dispositif de gestion de mémoire tampon de cellules recevant plusieurs flux de cellules caractérisés par des performances différentes de taux de perte de cellules et comprenant des moyens pour reconnaître qu'une perte de cellule est inévitable lorsque la mémoire tampon est pleine, ainsi que des moyens pour décider alors, qu'une cellule incidente doit être enregistrée dans la mémoire tampon en éliminant une autre cellule de la mémoire tampon, qui sera perdue, tandis que la première pourra ainsi être conservée.

Ce besoin est satisfait par le disposition de gestion de mémoire tampon de cellules de l'invention qui comprend des moyens pour associer à chaque flux de cellules une indication dynamique de bilan de perte de cellules, qui est une fonction d'une performance de perte de cellules assignée à ce flux et des pertes de cellules effectivement constatées pour ce flux de cellules, et des moyens pour sélectionner un flux de cellules, notamment par comparaison desdites indications dynamiques de perte de cellules, et pour causer en conséquence l'enregistrement de la cellule incidente dans la mémoire tampon disposant d'un emplacement libre après l'élimination d'une cellule du flux de cellules sélectionné.

Ainsi, l'invention prévoit de mettre en rapport, pour chaque flux de cellules, une performance de perte de cellules, c'est-à-dire un taux de perte de cellules qu'il est souhaitable de ne pas dépasser, et les pertes de cellules effectivement constatées, ce qui permet de savoir, pour chaque flux de cellules, si les pertes de cellules qu'il a déjà subi sont relativement faibles ou fortes, c'est-à-dire s'il constitue un bon candidat pouvant supporter sans inconvénient la perte additionnelle d'une cellule, ou, au contraire, un mauvais candidat auquel une telle éventualité doit être épargnée.

Avantageusement, dans ce dispositif de gestion de mémoire tampon de cellules des moyens sont prévus pour présélectionner dynamiquement ceux des flux de cellules ayant au moins une cellule enregistrée dans la mémoire tampon et les moyens pour sélectionner un flux de cellules sont couplés aux précédents afin que ladite sélection ait lieu parmi les flux de cellules présélectionnés.

Selon un mode de réalisation particulièrement simple de l'invention, ladite indication dynamique de bilan de perte de cellules est obtenue par des moyens de comptage associés à chaque flux de cellule et permettant d'établir un taux de perte effectif de cellules du flux de cellules, lequel est mis en relation avec ladite performance de perte de cellules de ce flux pour fournir ladite indication dynamique de bilan de perte de cellules.

En pratique, lesdits moyens de comptage associés à chaque flux de cellules comprennent un compteur de cellules avançant d'un pas à chaque cellule présentée à la mémoire tampon et fournissant un "jeton" de crédit de perte de cellule lorsqu'il a compté un nombre déterminé (Ni) de cellules, ainsi qu'un compteur de jetons avançant d'un pas à chaque jeton et reculant d'un pas chaque fois qu'il se produit une perte de cellule pour le flux de cellules.

Ledit nombre déterminé (Ni) de cellules est défini en fonction de ladite performance de perte de cellules du flux de cellules, de sorte que le nombre de jetons comptés par ledit compteur de jetons est une représentation du crédit de perte de cellules, c'est-à-dire du nombre de cellules qui peuvent être perdues par le flux de cellules dans le respect de ladite performance de perte de cellules et que le compte positif ou négatif fourni par le compteur de jetons indique à tout instant le bilan créditeur ou débiteur de perte de cellules de ce flux de cellules.

Avantageusement, lesdits moyens pour sélectionner un flux de cellules comprennent des moyens exploitant lesdites indications dynamiques de bilan de perte de cellules pour classer les flux de cellules suivant qu'ils sont plus ou moins aptes à faire l'objet d'une perte de cellule et des moyens pour faire un choix parmi ceux qui y sont aptes, ou même seulement parmi ceux qui y sont le plus aptes.

Ce choix peut être, par exemple, aléatoire ou guidé par un ordre de priorité, modifié cycliquement ou non. Il sera de préférence limité à celui ou ceux des flux de cellules ayant l'aptitude la plus élevée à faire l'objet d'une perte de cellule.

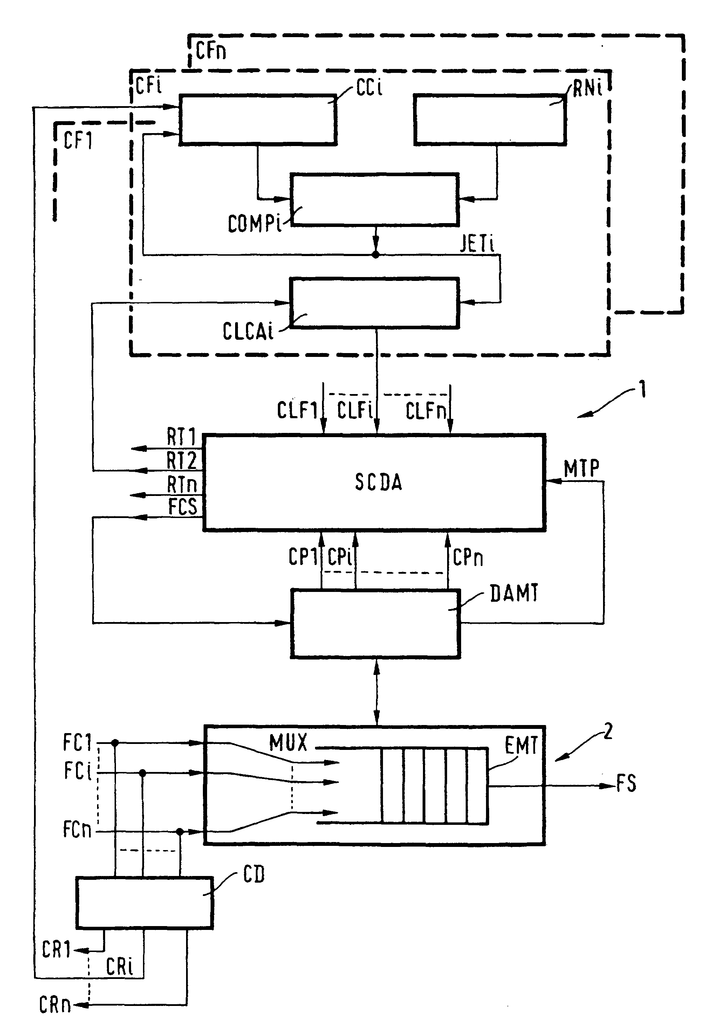

Les différents objets et caractéristiques de l'invention apparaîtront plus clairement à la lumière de la description qui va suivre d'exemples de réalisation de l'invention, faite en se référant à la figure annexée qui représente le diagramme-blocs d'un exemple de réalisation du dispositif de gestion de mémoire tampon de cellules de la présente invention.

Le dispositif de gestion de mémoire tampon de cellules 1 est associé à une mémoire tampon de cellules 2 recevant plusieurs flux de cellules d'entrée FC1, FCi, FCn, caractérisés par des performances différentes de taux de perte de cellules, et, après multiplexage au moyen d'un multiplexeur MUX, les enregistrant dans un espace de mémoire tampon EMT dont les cellules sont ensuite extraites pour être transmises sous la forme d'un (ou plusieurs) flux de cellules de sortie FS.

Le dispositif 1 (ou la mémoire tampon 2) comprend un détecteur de cellules CD couplé aux flux de cellules d'entrée FC1...FCn, identifiant pour chaque cellule d'entrée (par analyse de son contenu, de façon classique, soit directement, soit par l'intermédiaire d'une fonction de traduction d'étiquette) le flux de cellules auquel elle appartient et fournissant un signal CR1, CRi, CRn indiquant séparément l'arrivée de chaque cellule d'entrée selon le flux de cellules auquel elle appartient.

Un dispositif d'adressage de la mémoire tampon DAMT, de type classique, associé à la mémoire tampon 2 ou inclus dans le dispositif 1,. fournit les adresses d'emplacements libres dans d'espace de mémoire tampon EMT et liste les emplacements occupés, séparément, pour les différents flux de cellules d'entrée. Il fournit par ailleurs un signal MTP indiquant l'état de remplissage de la mémoire tampon, une valeur de ce signal MTP indiquant que la mémoire tampon est pleine et qu'une perte de cellule est inévitable, ainsi qu'un signal par flux de cellules CP1..., CPi...,CPn indiquant la présence ou l'absence d'au moins une cellule, séparément, pour chacun des flux de cellules dans la mémoire tampon, ce qui est aisément dérivé de la liste des emplacements occupés par chaque flux de cellules (liste vide ou non-vide).

Ces signaux sont transmis à des moyens de sélection SCDA prévus pour décider, lorsque le signal MTP indique que la mémoire tampon de cellules est pleine, si une cellule d'entrée incidente doit être enregistrée dans la mémoire tampon à la place d'une autre cellule qui sera perdue, tandis que la première pourra ainsi être conservée, c'est-à-dire, de façon plus générale, pour sélectionner le flux de cellules qui, en pareille circonstance devra supporter le perte d'une cellule.

Pour y parvenir, le dispositif 1 comprend encore des moyens CF1..., CFi..., CFn pour associer à chaque flux de cellules une indication dynamique de bilan de perte de cellules CLF1..., CLFi..., CLFn, qui est une fonction d'une performance de perte de cellules assignée à ce flux et des pertes de cellules effectivement constatées pour ce flux de cellules, et pour fournir de telles indications auxdits moyens de sélection SCDA.

D'une façon générale, l'invention prévoit de mettre en rapport, pour chaque flux de cellules, une performance de perte de cellules, c'est-à-dire un taux de perte de cellules qu'il est souhaitable de ne pas dépasser, et les pertes de cellules effectivement constatées, ce qui permet de savoir, pour chaque flux de cellules, si les pertes de cellules qu'il a déjà subi sont relativement faibles ou fortes, c'est-à-dire s'il constitue un bon candidat pouvant supporter sans inconvénient la perte d'une cellule, ou, au contraire, un mauvais candidat auquel une telle éventualité doit être épargnée.

Dans le mode de réalisation de la figure annexée, les moyens de sélection SCDA sont prévus pour présélectionner dynamiquement ceux des flux de cellules ayant au moins une cellule enregistrée dans la mémoire tampon par la lecture des signaux CP1..., CPi..., CPn, de manière que ladite sélection ait lieu parmi les flux de cellules présélectionnés.

L'indication dynamique de bilan de perte de cellules CLFi par exemple, est obtenue par des moyens de comptage associés à chaque flux de cellule, CCi, CLCAi en l'occurence, et permettant d'établir un taux effectif de perte de cellules du flux de cellules, lequel est mis en relation avec ladite performance de perte de cellules de ce flux pour fournir ladite indication dynamique de bilan dé perte de cellules.

Plus précisément, les moyens de comptage CFi associés au flux de cellules FCi, comprennent un compteur de cellules CCi avançant d'un pas à chaque cellule du flux de cellules FCi présentée à la mémoire tampon et signalée par le signal CRi. Il fournit un "jeton" de crédit de perte de cellules lorsqu'il a compté un nombre déterminé (Ni) de cellules. A cette fin, il est dans cet exemple de réalisation complété par un registre Ni contenant la valeur Ni et par un comparateur COMPi qui, lorsque le compteur CCi indique la valeur Ni, fournit le jeton JETi lequel commande la remise en position initiale du compteur CCi. Le jeton JETi est transmis à un compteur de jetons CLCAi avançant d'un pas à chaque jeton et reculant d'un pas chaque fois qu'il se produit une perte de cellule pour le flux de cellules Fci de la manière qui sera exposée un peu plus loin.

Ledit nombre déterminé (Ni) de cellules est défini en fonction de ladite performance de perte de cellules du flux de cellules, de sorte que le nombre de jetons comptés par le compteur de jetons CLCAi, est une représentation du nombre de cellules qui peuvent être perdues par le flux de cellules dans le respect de ladite performance de perte de cellules et que le compte positif ou négatif fourni par le compteur de jetons, qui est ladite indication dynamique de bilan créditeur ou débiteur de perte de cellules CLFi, indique à tout instant le bilan de pertes de cellules de ce flux de cellules par rapport à ce nombre.

Les moyens de sélection SCDA, comprennent des moyens exploitant lesdites indications dynamiques de bilan de perte de cellules CLF1..., CLFi..., CLFn pour classer les flux de cellules suivant qu'ils sont plus ou moins aptes à faire l'objet d'une perte de cellule et des moyens pour faire un choix parmi ceux qui y sont aptes, ou même seulement parmi ceux qui y sont le plus aptes. Le choix ainsi effectué se manifeste sous deux formes : un signal est émis sur l'un des conducteurs RT1..., RTi..., RTn pour retirer une unité (un jeton) du compteur de jetons, CLCAn par exemple, associé au flux de cellules sélectionné FCn, et un signal est émis sur un ensemble de conducteur FCS, qui identifie le flux de cellules sélectionné, afin de provoquer l'enregistrement de la cellule incidente du flux de cellules FCi dans la mémoire tampon. Selon la discipline utilisée pour gérer la file d'attente (ce qui sort du cadre de l'invention), par exemple première entrée/première sortie, etc., la cellule est enregistrée soit à l'emplacement libéré, soit à un autre emplacement après réorganisation de la file d'attente. Il convient de noter que les moyens de sélection SCDA peuvent très bien sélectionner le flux de cellule FCi. L'effet sera le même : ce flux de cellule perdra une cellule. Dans ce cas particulier, une solution équivalente consiste à ne pas accepter la cellule d'entrée appartenant au flux FCi, laquelle sera perdue.

L'opération à effectuer dans les moyens de sélection SCDA comprend un choix lorsque plusieurs flux de cellules ont à la fois au moins une cellule dans la mémoire tampon et un même compte de jetons qui est le plus élevé, ou alors qui est simplement positif.

Ce choix peut être par exemple : aléatoire ; guidé par un ordre de priorité modifié cycliquement, guidé par un ordre de priorité non modifiable, c'est-à-dire prédéterminé ; ou guidé par les performances de perte de cellules assignées au flux de cellules considéré.

Les moyens que l'on vient de décrire ne sont évidemment indiqués qu'à titre d'exemple. Dans la pratique, il est clair que l'on peut envisager une réalisation sous la forme d'un ensemble de circuits logiques intégrés dans une même puce de semi-conducteur. Mais aussi, une partie au moins des opérations à accomplir peuvent être confiées à un processeur programmé. Selon la technologie employée, le spécialiste pourra être amené à modifier la réalisation que l'on vient de décrire, afin d'atteindre le meilleur compromis coût/performances, notamment au stade de la découpe en blocs fonctionnels, du choix des liaisons entre blocs qui peuvent à transmission série ou parallèle, de l'ordre dans lequel les opérations sont accomplies, certaines pouvant être interverties, etc.

## Revendications

1. Dispositif de gestion de mémoire tampon de cellules recevant plusieurs flux de cellules **caractérisés par** des performances différentes de taux de perte de cellules et comprenant des moyens pour reconnaître qu'une perte de cellule est inévitable lorsque la mémoire tampon est pleine, ainsi que des moyens pour décider alors qu'une cellule incidente doit être enregistrée dans la mémoire tampon en éliminant une autre cellule de la mémoire tampon, qui sera perdue, tandis que la première pourra ainsi être conservée, **caractérisé en ce que** ledit dispositif comprend :
- des moyens (CF1..., CFi..., CFn) pour associer à chaque flux de cellules (FC1..., FCi..., FCn) une indication dynamique de bilan de perte de cellules (CLF1..., CLFi..., CLFn), qui est une fonction d'une performance de perte de cellules (Ni) assignée à ce flux et des pertes de cellules (RTi) effectivement constatées pour ce flux de cellules, et
- des moyens (SCDA) pour sélectionner un flux de cellules par comparaison desdites indications dynamiques de perte de cellules, et pour causer en conséquence l'enregistrement de la cellule incidente dans la mémoire tampon disposant d'un emplacement libre après élimination d'une cellule du flux de cellules sélectionné.

2. Dispositif de gestion de mémoire tampon de cellules conforme à la revendication 1, **caractérisé en ce que** des moyens (DAMT, CP1..., CPi..., CPn) sont prévus pour présélectionner dynamiquement ceux des flux de cellules ayant au moins une cellule enregistrée dans la mémoire tampon et **en ce que** lesdits moyens (SCDA) pour sélectionner un flux de cellules sont couplés aux précédents afin que ladite sélection ait lieu parmi les flux de cellules présélectionnés.

3. Dispositif de gestion de mémoire tampon de cellules conforme à la revendication 1 ou 2, **caractérisé en ce que** ladite indication dynamique de bilan de perte de cellules est obtenue par des moyens de comptage (CCi, CLCAi) associés à chaque flux de cellule et permettant d'établir un taux de perte effectif de cellules du flux de cellules, lequel est mis en relation avec ladite performance de perte de cellules de ce flux pour fournir ladite indication dynamique de bilan de perte de cellules (CLF1..., CLFi..., CLFn).

4. Dispositif de gestion de mémoire tampon de cellules conforme à la revendication 3, **caractérisé en ce que** lesdits moyens de comptage associés à chaque flux de cellules comprennent un compteur de cellules (CCi) avançant d'un pas à chaque cellule présentée à la mémoire tampon et fournissant un "jeton" (JETi) lorsqu'il a compté un nombre déterminé (Ni) de cellules, ainsi qu'un compteur de jetons (CLCAi) avançant d'un pas à chaque jeton et reculant d'un pas chaque fois qu'il se produit une perte de cellule pour le flux de cellules.

5. Dispositif de gestion de mémoire tampon de cellules conforme à la revendication 4, **caractérisé en ce que** ledit nombre déterminé (Ni) de cellules est défini en fonction de ladite performance de perte de cellules du flux de cellules, de sorte que le nombre de jetons comptés par ledit compteur de jetons est une représentation du nombre de cellules qui peuvent être perdues par le flux de cellules dans le respect de ladite performance de perte de cellules et que le compte positif ou négatif fourni par le compteur de jetons indique à tout instant le bilan créditeur ou débiteur de perte de cellules de ce flux de cellules.

6. Dispositif de gestion de mémoire tampon de cellules conforme à l'une quelconque des revendications 2 à 5, **caractérisé en ce que** lesdits moyens pour sélectionner un flux de cellules (SCDA) comprennent des moyens exploitant lesdites indications dynamiques de bilan de perte de cellules pour classer les flux de cellules suivant qu'ils sont plus ou moins aptes à faire l'objet d'une perte de cellule et des moyens pour faire un choix parmi ceux qui y sont aptes.

7. Dispositif de gestion de mémoire tampon de cellules conforme à la revendication 6, **caractérisé en ce que** ledit choix est un choix aléatoire.

8. Dispositif de gestion de mémoire tampon de cellules conforme à la revendication 6, **caractérisé en ce que** ledit choix est guidé par un ordre de priorité modifié cycliquement.

9. Dispositif de gestion de mémoire tampon de cellules conforme à la revendication 6, **caractérisé en ce que** ledit choix est guidé par un ordre de priorité prédéterminé.

10. Dispositif de gestion de mémoire tampon de cellules conforme à la revendication 6, **caractérisé en ce que** ledit choix est guidé par les performances de pertes de cellules assignées aux flux de cellules considérés.

11. Dispositif de gestion de mémoire tampon de cellules conforme à la revendication 7, 8, 9 ou 10, **caractérisé en ce que** ledit choix est limité à celui ou ceux des flux de cellules ayant l'aptitude la plus élevée à faire l'objet d'une perte de cellule.

## Patentansprüche

1. Vorrichtung zur Verwaltung eines Zellenpufferspeichers, der mehrere Zellflüsse empfängt, die durch verschiedene Leistungen bezüglich der Verlustrate von Zellen gekennzeichnet sind, und über Mittel verfügt, um zu erkennen, dass ein Zellverlust unvermeidbar ist, wenn der Pufferspeicher voll ist, sowie über Mittel, um dann zu entscheiden, dass eine ankommende Zelle im Pufferspeicher gespeichert werden muss, wobei eine andere Zelle des Pufferspeichers gelöscht wird, die dann verloren ist, während die erste Zelle somit erhalten werden kann, **dadurch gekennzeichnet, dass** die genannte Vorrichtung Folgendes umfasst:
- Mittel (CF1..., CFi..., CFn) , um jedem Zellfluss (FC1..., FCi..., FCn) eine dynamische Bilanzangabe des Zellenverlusts (CLF1..., CLFi..., CLFn), die eine Funktion einer diesem Fluss zugeordneten Leistung bezüglich des Zellenverlustes (Ni) und der bei diesem Zellfluss effektiv festgestellten Zellenverluste (RTi) ist, zuzuweisen, sowie
- Mittel (SCDA), um aufgrund eines Vergleichs der genannten dynamischen Angaben eines Zellenverlustes einen Zellfluss auszuwählen und um folglich die Speicherung der ankommenden Zelle in dem über einen freien Platz verfügenden Pufferspeicher zu veranlassen, nachdem eine Zelle des gewählten Zellflusses gelöscht worden ist.

2. Vorrichtung zur Verwaltung eines Zellenpufferspeichers gemäß Anspruch 1, **dadurch gekennzeichnet, dass** Mittel (DAMT, CP1..., CPi..., CPn) vorgesehen sind, um dynamisch eine Vorauswahl derjenigen Zellflüsse vorzunehmen, die über mindestens eine in dem Pufferspeicher gespeicherte Zelle verfügen, und dass die genannten Mittel (SCDA) zur Auswahl eines Zellflusses mit den oben genannten Mitteln gekoppelt sind, damit die genannte Auswahl unter den vorgewählten Zellflüssen getroffen werden kann.

3. Vorrichtung zur Verwaltung eines Zellenpufferspeichers gemäß Anspruch 1 oder 2, **dadurch gekennzeichnet, dass** die genannte dynamische Bilanzangabe des Zellenverlustes durch jedem Zellfluss zugeordnete Zählmittel (CCi, CLCAi) ermittelt wird, mit denen eine effektive Rate des Zellenverlusts des Zellflusses errechnet werden kann, die mit der genannten Leistung bezüglich des Zellenverlusts dieses Flusses in Beziehung gesetzt wird, um die genannte dynamische Bilanzangabe des Zellenverlusts (CLF1..., CLFi..., CLFn) zu liefern.

4. Vorrichtung zur Verwaltung eines Zellenpufferspeichers gemäß Anspruch 3, **dadurch gekennzeichnet, dass** die jedem Zellfluss zugeordneten Zählmittel über einen Zellenzähler (CCi) verfügen; der bei jeder dem Pufferspeicher übermittelten Zelle um einen Schritt zunimmt und eine "Berechtigungsmarke" (JETi) ausgibt, wenn er eine bestimmte Anzahl (Ni) von Zellen gezählt hat, sowie über einen Berechtigungsmarkenzähler (CLCAi), der bei jeder Berechtigungsmarke um einen Schritt erhöht wird und jedes Mal, wenn bei dem Zellfluss ein Zellverlust eintritt, um einen Schritt zurückgeht.

5. Vorrichtung zur Verwaltung eines Zellenpufferspeichers gemäß Anspruch 4, **dadurch gekennzeichnet, dass** die genannte bestimmte Anzahl (Ni) von Zellen in Abhängigkeit von der genannten Leistung bezüglich des Zellenverlusts des Zellflusses definiert ist, sodass die Anzahl der von diesem Berechtigungsmarkenzähler gezählten Berechtigungsmarken die Anzahl von Zellen darstellt, die von dem Zellfluss unter Einhaltung der genannten Leistung bezüglich des Zellenverlusts verloren gehen können, und das von dem Berechtigungsmarkenzähler übermittelte positive oder negative Konto jederzeit die aktive oder passive Bilanz des Zellenverlusts dieses Zellflusses angibt.

6. Vorrichtung zur Verwaltung eines Zellenpufferspeichers gemäß einem der Ansprüche 2 bis 5, **dadurch gekennzeichnet, dass** die genannten Mittel zur Auswahl eines Zellflusses (SCDA) über Mittel zur Auswertung der genannten dynamischen Bilanzangaben des Zellenverlustes verfügen, um die Zellflüsse je nachdem, ob sie mehr oder weniger geeignet sind, einen Zellverlust hinzunehmen, zu klassifizieren, sowie über Mittel, um unter den Zellflüssen, die dafür geeignet sind, eine Auswahl zu treffen.

7. Vorrichtung zur Verwaltung eines Zellenpufferspeichers gemäß Anspruch 6, **dadurch gekennzeichnet, dass** die genannte Auswahl eine zufällige Auswahl ist.

8. Vorrichtung zur Verwaltung eines Zellenpufferspeichers gemäß Anspruch 6, **dadurch gekennzeichnet, dass** die genannte Auswahl durch eine zyklisch geänderte Rangfolge gesteuert wird.

9. Vorrichtung zur Verwaltung eines Zellenpufferspeichers gemäß Anspruch 6, **dadurch gekennzeichnet, dass** die genannte Auswahl durch eine vorher bestimmte Rangfolge gesteuert wird.

10. Vorrichtung zur Verwaltung eines Zellenpufferspeichers gemäß Anspruch 6, **dadurch gekennzeichnet, dass** die genannte Auswahl durch die den betreffenden Zellflüssen zugeordneten Leistungen bezüglich des Zellenverlusts gesteuert wird.

11. Vorrichtung zur Verwaltung eines Zellenpufferspeichers gemäß dem Anspruch 7, 8, 9 oder 10, **dadurch gekennzeichnet, dass** die genannte Auswahl auf denjenigen oder diejenigen der Zellflüsse beschränkt ist, die am besten dafür geeignet sind, einen Zellverlust hinzunehmen.

## Claims

1. A device for managing a cell buffer memory receiving a plurality of cell streams, the streams being **characterized by** different performance levels in terms of cell loss rate and the device having means for recognizing that the loss of a cell is inevitable when the buffer memory is full, and means for then deciding that an incoming cell is to be recorded in the buffer memory, thereby eliminating another cell from the buffer memory, which cell will be lost, while the incoming cell is conserved, the device being **characterized in that** it comprises:
- means (CF1, ..., CFi, ..., CFn) for associating each cell stream (FC1, ..., FCi,..., FCn), with a dynamic cell loss balance indicator (CLF1, ..., CLFi, ..., CLFn), which indicator is a function both of a cell loss performance level (Ni) allocated to the stream and of cell losses (RTi) actually observed for said cell stream; and
- means (SCDA) for selecting a cell stream for cell loss by comparing said dynamic cell loss indicators and for causing the incoming cell to be recorded in the buffer memory which has a free location after consequential elimination of a cell from the selected cell stream.

2. A device for managing a cell buffer memory in accordance with claim 1, **characterized in that** means (DAMT, CP1, ..., CPi, ..., CPn) are provided for dynamically preselecting those of the cell streams that have at least one cell recorded in the buffer memory, and **in that** said means (SCDA) for selecting a cell stream for cell loss are coupled to the preceding means so that said selection takes place from amongst the preselected cell streams.

3. A device for managing a cell buffer memory in accordance with claim 1 or claim 2, **characterized in that** said dynamic cell loss balance indicator is obtained by counter means (CCi, CLCAi) associated with each cell stream and enabling an actual rate of cell loss from the cell stream to be established, which rate is matched with said cell loss performance level for said stream in order to provide said dynamic cell loss balance indicator (CLF1, ..., CLFi, ..., CLFn).

4. A device for managing a cell buffer memory in accordance with claim 3, **characterized in that** said counter means associated with each cell stream comprise both a cell counter (CCi) that increments by one step for each cell presented to the buffer memory and that provides a "token" (JETi) whenever it has counted a determined number (Ni) of cells, and a token counter (CLCAi) that increments by one step for each token and that decrements by one step each time a cell is lost from the cell stream.

5. A device for managing a cell buffer memory in accordance with claim 4, **characterized in that** said determined number (Ni) of cells is defined as a function of said cell loss performance level for the cell stream, so that the number of tokens counted by said token counter represents the number of cells that can be lost by the cell stream while complying with said cell loss performance level, and the positive or negative count supplied by the token counter indicates at all instants the cell loss credit or debit balance of said cell stream.

6. A device for managing a cell buffer memory in accordance with any one of claims 2 to 5, **characterized in that** said means for selecting a cell stream (SCDA) for cell loss comprise means making use of said dynamic cell loss balance indicators to classify the cell streams as a function of whether they are more or less suitable for suffering the loss of a cell, and means for making a selection from amongst those streams which are suitable.

7. A device for managing a cell buffer memory in accordance with claim 6, **characterized in that** said selection is a random selection.

8. A device for managing a cell buffer memory in accordance with claim 6, **characterized in that** said selection is guided by a priority order that is modified periodically.

9. A device for managing a cell buffer memory in accordance with claim 6, **characterized in that** said selection is guided by a predetermined priority order.

10. A device for managing a cell buffer memory in accordance with claim 6, **characterized in that** said selection is guided by the cell loss performance level allocated to the cell stream in question.

11. A device for managing a cell buffer memory in accordance with claim 7, 8, 9, or 10, **characterized in that** said selection is restricted to the cell stream(s) that are most suitable for suffering the loss of a cell.
